(19) Europäisches Patentamt
European Patent Office
Office européen des brevets

(11) Publication number: **0 005 903**
**B1**

(12) # EUROPEAN PATENT SPECIFICATION

(45) Date of publication of patent specification: **01.06.83**

(51) Int. Cl.³: **C 08 J 9/02**, C 08 J 9/00

(21) Application number: **79300698.2**

(22) Date of filing: **25.04.79**

(54) **Process for the manufacture of polyurea foams.**

(30) Priority: **30.05.78 GB 2377378**

(43) Date of publication of application:
**12.12.79 Bulletin 79/25**

(45) Publication of the grant of the patent:
**01.06.83 Bulletin 83/22**

(84) Designated Contracting States:
**BE DE FR GB NL**

(56) References cited:
**DE - A - 2 627 719**
**FR - A - 1 450 187**
**FR - A - 2 187 836**
**GB - A - 937 069**
**GB - A - 1 158 544**
**GB -A - 1 491 219**
**US - A - 2 726 219**

***Encyclopedia of Polymer Science and Technology*, Vol. 7, p. 21**

**The file contains technical information submitted after the application was filed and not included in this specification**

(73) Proprietor: **IMPERIAL CHEMICAL INDUSTRIES PLC**
**Imperial Chemical House Millbank**
***London SW1P 3JF (GB)***

(72) Inventor: **Wooler, Alan Metcalf**
**115A Seymour Grove Old Trafford**
**Manchester M16 0LQ (GB)**

(74) Representative: **Houghton, Malcolm John et al,**
**Imperial Chemical Industries PLC Legal Department: Patents Thames House North Millbank**
**London SW1P 4QG (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for the manufacture of polyurea foams

This invention relates to a process for the manufacture of polyurea foams.

It has already been proposed to manufacture foamed plastics materials having a polyurea structure by reacting organic polyisocyanates with water in the presence of catalysts for the reaction and optionally other additives such as surface active agents, fillers, fire retardants and plasticisers.

Thus, our Belgian Patent No. 834172 describes a process for the manufacture of polyurea foams which comprises reacting an organic polyisocyanate with at least a chemically equivalent amount of water in the presence of an imidazole compound. In order to reduce the brittleness of the foams, and at the same time improve their fire-resistance, it is proposed in the Belgian patent to include a tris-(halogenoalkyl) phosphate in the foam-forming reaction mixture. It has been found, however, that polyurea foams containing tris-(halogenoalkyl) phosphates can be adversely affected by prolonged exposure to heat or humidity, the main effect being the development of acidity in the foams.

The present invention is based on the discovery that other compounds as hereinafter described have a fire-retardant and/or plasticising effect without having the undesirable effects of the tris-(halogenoalkyl) phosphates when the foams are exposed to heat or humidity.

Thus, according to the present invention, there is provided a process for the manufacture of polyurea foams which comprises reacting an organic polyisocyanate with at least a chemically equivalent amount of water in the presence of a catalyst for the reaction and a triaryl phosphate and/or an aromatic halogen compound.

Organic polyisocyanates which may be used in the process of the invention include particularly those aromatic polyisocyanates that have already been described for use in the manufacture of polymeric foams such as polyurethane, polyurea or polyisocyanurate foams. Particular mention may be made of diphenylmethane diisocyanate and tolylene diisocyanate in their various foams. It is preferred to use a polyisocyanate component comprising diphenylmethane diisocyanate, especially diphenylmethane-4,4′-diisocyanate which may be in admixture with isomeric or other related polyisocyanates or may have been modified in known manner to introduce a significant isocyanurate, carbodiimide, uretonimine or biuret content. Polyisocyanate components comprising diphenylmethane diisocyanate include the crude diphenylmethane diisocyanates that have been fully described in the prior art. Particularly useful crude diphenylmethane diisocyanate compositions contain from 30 to 95%, especially from 40 to 80%, by weight of diphenylmethane diisocyanates, the remainder being largely polymethylene polyphenyl polyisocyanates of functionality greater than two. Diphenylmethane diisocyanate, in one or other of its forms, may also be used in admixture with tolylene diisocyanate.

The water used in the process of the invention must be in an amount that is at least chemically equivalent to the isocyanate groups present in the organic polyisocyanate on the basis of two isocyanate groups reacting with one molecule of water. Useful results can be obtained by using up to 10 times the amount of water that is equivalent to the polyisocyanate but it is preferred to use from 1.5 to 5 and especially from 2 to 4 times the chemically equivalent amount.

Catalysts for the reaction between the polyisocyanate and water have been described in the literature relating to the reaction of organic isocyanates. Particular mention may be made of tertiary amines, especially water-soluble tertiary amines. Especially suitable catalysts include imidazole compounds, especially those of the formula:

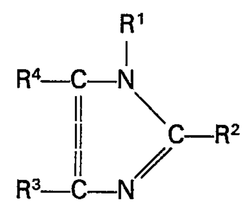

wherein $R^1$, $R^2$, $R^3$ and $R^4$ each independently represents hydrogen or optionally substituted alkyl especially lower alkyl. Examples of such compounds include imidazole, 1-methylimidazole, 2-methylimidazole, 4-methylimidazole, 1,2-dimethylimidazole, 2,4-dimethylimidazole, 1,2,4-trimethylimidazole, 1,2,5-trimethylimidazole, 2,4,5-trimethylimidazole and 1,2,4,5-tetramethylimidazole. Imidazole compounds that have been found to be particularly useful in the process of the invention include imidazole, 1-methylimidazole, 2-methylimidazole and 1,2-dimethylimidazole and mixtures of two or more of these compounds. The imidazole compound is used in a catalytically effective amount, for example from 0.5 to 10%, especially 1.5 to 8%, by weight based on the weight of organic polyisocyanate. The most suitable amount to use in any particular case depends on the imidazole compound being used and on the other components of the formulation and can easily be found by trial.

Many of the imidazole compounds are sufficiently soluble in water to be used in the form of a solution in the water that is reacted with the polyisocyanate. In fact, an aqueous solution of 2-methylimidazole can be prepared directly

from the condensation of glyoxal, acetaldehyde and ammonia in water. The occurrence of crystallisation from the aqueous solutions at low temperatures can often be avoided by using mixtures of imidazole compounds. The alkalinity of the aqueous solutions can cause corrosion of equipment containing aluminium or zinc but this can be reduced by saturating the catalyst solution with carbon dioxide or partially neutralising it with boric acid. Imidazole compounds having lower aqueous solubility may be dissolved in another component, for example the triaryl phosphate.

The imidazole compounds give exceptional stability to the foams during formation and in this respect they are superior to other catalysts. Thus, the problems of foam collapse and excessive shrinkage which can occur in the preparation of foams using some catalysts are largely overcome by using the imidazole compounds. Furthermore, the imidazole compounds are more tolerant to the presence or absence of other conventional foam additives.

Triaryl phosphates which may be used in the process of the invention include triphenyl phosphate, tritolyl phosphate and trixylyl phosphate. The triaryl phosphates act as efficient plasticisers and reduce the brittleness of the rigid foams made by the process of the invention. At the same time the fire-retardancy of the foams is improved. Particularly useful amounts of triaryl phosphate are in the range of from 10 to 200% and especially from 25 to 75% by weight based on the weight of polyisocyanate.

The fire-retardancy of the foams containing triaryl phosphates can be further improved by including an aromatic halogen compound in the foam-forming reaction mixture. Suitable aromatic halogen compounds include pentabrominated diphenyl ether and esters of chlorendic and tetrabromophthalic acids. The aromatic halogen compounds can also be used alone, that is to say in the absence of triaryl phosphates. When used alone, suitable amounts of the aromatic halogen compounds are similar to the amounts of triaryl phosphates given above.

The aromatic halogen compound may optionally contain isocyanate-reactive groups, for example it may be a polyester diol or higher polyol derived from chlorendic or tetrabromophthalic acid. In this case, it is useful to react the compound with the polyisocyanate to form a prepolymer before carrying out the main foam-forming reaction.

The functions of the triaryl phosphate and the aromatic halogen compound may be combined in one compound by using a halogen-substituted triaryl phosphate, for example a brominated tritolyl phosphate containing about 18% bromine on a weight basis.

The foams produced by the process of the invention containing a triaryl phosphate and/or an aromatic halogen compound are more resistant to heat and humidity than are corresponding foams containing tris-(halogenoalkyl) phosphates.

In addition to the ingredients already mentioned, there may be included in the foam-forming reaction mixture other additives of the types conventionally employed in the production of polymeric foams from organic polyisocyanates. Thus, the reaction mixture may optionally contain surface active agents or foam stabilisers, for example siloxaneoxyalkylene copolymers, anionic surface active agents and non-ionic surface active agents such as ethylene oxide propylene oxide block copolymers. The surface active agent may be used in amounts of from 0.01 to 10% by weight based on the weight of polyisocyanate but is especially effective in amounts of from 0.1 to 5%.

The stability of the foam-forming system may be still further improved by including a minor amount of an organic polyol in the foam formulation, keeping the water in an amount that is at least chemically equivalent to the polyisocyanate. Suitable organic polyols include nonpolymeric polyols, for example ethylene glycol, diethylene glycol, 1,4-butane diol, glycerol, hexanetriol and sorbitol.

Other suitable polyols include polymeric polyols which are useful in reducing the friability of the foams. Such polyols usually have from 2 to 8 hydroxyl groups per molecule and include, in particular, polyether and polyester polyols. These have been widely described in the prior art, for example in "Polyurethanes, Chemistry and Technology" by J. H. Saunders and K. C. Frisch (Interscience Publishers), especially at pages 32—48 of Part I. Useful polyether polyols include polyoxypropylene polyols and ethylene oxide tipped polyoxypropylene polyols. Useful polyester polyols include the reaction products of dihydric alcohols with dicarboxylic acids, optionally with the inclusion of higher functionality reactants. The polymeric polyols may also be used in a form where they have been modified in known manner by polymerising one or more ethylenically unsaturated monomers, for example acrylonitrile, styrene or methyl methacrylate therein. Particularly suitable polymeric polyols have hydroxyl numbers of less than 600, preferably in the range 30—200. The amount of organic polyol used should preferably not exceed 30% of the polyisocyanate on a chemical equivalents basis. The polyol may be included in a formulation by prereacting it with the polyisocyanate to give a prepolymer or by mixing it in with the water and using as a one-shot system.

It is also advantageous to include an amino or phenolic resin in the form formulation. In addition to the economic benefit, the presence of the amino or phenolic resin has the useful effect of absorbing some of the heat of reaction and so reducing the temperature rise during

foaming, and produces improved fire resistance with reduced smoke evolution.

The amino and phenolic resins are known materials that have been fully described in the prior art as have methods for their preparation.

The amino resins are resinous condensation products of amino type compounds such as urea, thiourea, ethyleneurea, melamine, substituted melamines, guanamine, benzoguanamine or dicyandiamide with aldehydes such as formaldehyde, acetaldehyde, propionaldehyde, butyraldehyde, benzaldehyde or furfuraldehyde. The preferred resins and the condensation products of urea or melamine with formaldehyde. The properties of the resins may be varied in known manner by appropriate adjustment of the type and ratio of components and the reaction conditions of catalyst, time and temperature.

The phenolic resins are resinous condensation products of phenols such as phenol, cresols, xylenols or resorcinol with formaldehyde or, less usually, other aldehydes such as acetaldehyde, propionaldehyde, butyraldehyde, benzaldehyde, furfuraldehyde or hexamethylene tetramine. The condensation of the phenol with the aldehyde may be carried out in known manner under acid or alkaline conditions and the properties of the product will vary accordingly. Generally, the phenol and the aldehyde are reacted in a ratio of from 1 to 3 mols of aldehyde per mol of phenol.

The amounts of amino or phenolic resins used may vary over a wide range. Suitable foamed products are obtained when the amino or phenolic resin constitutes from 5 to 70% and preferably from 20 to 40% of the weight of the final foam.

The amino or phenolic resin may be mixed with the other components of the foam formulation in any suitable manner. In some cases it may be convenient to pre-mix the resin with one of the organic components of the formulation, for example the triaryl phosphate or the aromatic halogen compound but it is usually preferred to use the resin in the form of an aqueous syrup and to mix it with the water used in the foaming process. In this case, the water present in the aqueous syrup must be taken into account in any consideration of the stoichiometry of the system. Incorporating the resin with the aqueous component of the reaction mixture is useful in that it increases the volume of the aqueous component which otherwise is very small in relation to the polyisocyanate component. It is also advantageous in producing a blend of a viscosity suitable for metering by gear pumps and similar equipment, which are subject to stoppage when used with low viscosity components.

In general, urea-formaldehyde and malamine-formaldehyde resins are preferred because they are more compatible with water than are the phenol-formaldehyde resins and hence may be blended more easily with the aqueous component. It is often convenient to dissolve phenol-formaldehyde resins in plasticiser-type additives such as a triaryl phosphate. This solution may be used as a separate component of the reaction mixture or it may be emulsified into the aqueous component using a surfactant.

Other additives which may be incorporated in the reaction mixture include dyes, pigments, fillers, inorganic flame retardants such as ammonium phosphate, ammonium polyphosphate and ammonium bromide and urea.

The foam-forming ingredients used in the process of the invention may be mixed together continuously or discontinuously using any of the methods and equipment that have been described for the preparation of polymeric foams from organic polyisocyanates. The starting materials may be at normal or slightly elevated temperatures, for example 50°C.

The foams obtained according to the process of the invention may have low or high densities and may be used in packaging, horticultural applications, general purpose insulation, cavity wall insulation, panel filling etc. The usefulness of the foam for any particular application may be influenced by varying the formulation. The foams may be formed in combination with other materials, for example flexible or rigid facing materials, using known methods, for example continuous lamination techniques.

The invention is illustrated but not limited by the following Examples in which all parts and percentages are by weight. The words "Aerolite", "Firemaster", "Pluronic" and "Reofos" appearing in the Examples are registered trade marks.

Example 1

100 Parts of a crude diphenylmethane diisocyanate composition containing approximately 55% of diisocyanatodiphenylmethane isomers and having an NCO content of 30.7% are mixed with 50 parts of tritolyl phosphate and 10 parts of dioctyl tetrabromophthalate. To this mixture is added a solution of 4 parts of 2-methylimidazole in 15 parts of water. The resulting open-celled rigid foam is highly resistant to fire.

Example 2

100 Parts of the crude diphenylmethane diisocyanate described in Example 1, 35 parts of triphenyl phosphate, 15 parts of Firemaster PHT4 Diol and 1 part of Surfactant LK 433 are reacted at 80°C to form a prepolymer which when cool is mixed with 2 parts of 1,2-dimethylimidazole dissolved in 18 parts of water.

The reaction mixture creams in 10 seconds and rises in 80 seconds to give a foam having a density of 8 kg/m$^3$. The foam has low friability and good fire-retardency.

Example 3

100 Parts of the prepolymer described in Example 2 are mixed with a solution of 4 parts of 2-methylimidazole in 15 parts of water bulked with 50 parts of urea-formaldehyde syrup (Aerolite A300 ex Ciba-Geigy). This gives a creamy emulsion starting to rise at 15 seconds and completing the rise at 90 seconds producing a fine-textured foam of density 18 kg/$m^3$ and having good resistance to burning and penetration by a bunsen flame.

Example 4

A prepolymer is prepared from 100 parts of the crude diphenylmethane diisocyanate described in Example 1 and 10 parts of a polyester derived from tetrabromo phthalic anhydride, glycerol and 1,2-propylene glycol having a hydroxyl value of 173 and an acid value of 0.8 diluted with 40 parts of Reofos 50 (a synthetic triaryl phosphate available from Ciba-Geigy). The prepolymer is then mixed with a blend of 75 parts of Aerolite A300, a solution of 6 parts of 2-methylimidazole in 22 parts water and 1 part of a non ionic surfactant LK 443 available from Air Products Limited, this forming a second component of a consistency suitable for pumping in a foam dispensing machine. The resulting mixture produces a creamy emulsion which starts to expand at about 15 seconds and completes expansion to a foam in about 90 seconds when the cells open allowing escape of water vapour. The resulting fine textured rigid foam has a density of 18 kg/$m^3$ when dry. This foam is of good dimensional stability, and displays resistance to burning. It shows excellent properties when subjected to accelerated ageing tests.

Example 5

30 Parts of Aerolite A300 are mixed with 3 parts of 1,2-dimethylimidazole in 3 parts of water and to this is then stirred in 1 part of Surfactant LK 443 to make the first component. A second component is prepared by blending 35 parts of the crude diphenyl methane diisocyanate described in Example 1 with 15 parts of Reofos 50. On mixing the two components, foaming starts at 20 seconds and expansion is complete in 40 seconds giving a very fine textured foam of density 18 kg/$m^3$. Even without halogen present, the foam is difficult to ignite and is self extinguishing with only whitish smoke.

Example 6

A prepolymer is prepared from 100 parts crude diphenylmethane diisocyanate and 8 parts tetrabromobisphenol A predissolved by heating to 70°C into 40 parts Reofos 50, the reaction being accelerated by addition of 0.2 parts of N,N-dimethylbenzylamine.

After cooling, the 148 parts of prepolymer are admixed with an aqueous activator comprising 6 parts of 2-methylimidazole and 0.5 part of Pluronic L62 bulked to 30 parts with water. This forms a fairly thick emulsion which starts to foam after 15 seconds, completing the foaming in 65 seconds and producing a low density fine textured rigid foam of density 9.0 kg/$m^3$. It is of good stability and displays good non-flaming properties when subjected to a bunsen flame.

Example 7

To 148 parts of the prepolymer described in Example 6 are added 6 parts of N,N-dimethylbenzylamine and 2 parts of Silicone L5340 giving a pale pink clear solution at laboratory temperature. On admixture with 21 parts of water, an emulsion is formed which starts to foam after 15 seconds, foaming being completed in 55 seconds when the cells open allowing excess water vapour to escape and resulting in an open-celled fine-textured rigid foam having density 10.7 kg/$m^3$. It shows very good self extinguishing properties when a flame is applied.

Example 8

10 Parts of tetrabromobisphenol A are dissolved into 37 parts of Reofos 50 by heating to 70°C with stirring to give a clear yellow liquid free from crystallisation on cooling to 20°C. To this is then added 2 parts of N,N-dimethylbenzylamine and 1 part of Silicone L5340. 50 parts of this solution comprise component A. For component B a solution is prepared from 40 parts Aerolite A300 and 10 parts water, the water acting mainly to reduce the viscosity. For component C there is used 100 parts crude diphenylmethane diisocyanate.

On admixing these three components, an emulsion is obtained which starts to foam after 30 seconds and completes its rise after 3 minutes giving a fine-textured open-celled foam having a density of 11.5 kg/$m^3$.

## Claims

1. A process for the manufacture of polyurea foams which comprises reacting an organic polyisocyanate with at least a chemically equivalent amount of water, on the basis of two isocyanate groups reacting with one molecule of water, in the presence of a catalyst for the reaction and a triaryl phosphate and/or an aromatic halogen compound.

2. A process as claimed in claim 1 wherein the triaryl phosphate and/or aromatic halogen compound is used in an amount of from 10 to 200% by weight based on the weight of the polyisocyanate.

3. A process as claimed in claim 2 wherein the triaryl phosphate and/or aromatic halogen compound is used in an amount of from 25 to 75% by weight based on the weight of polyisocyanate.

4. A process as claimed in any one of the preceding claims wherein the foam-forming reaction mixture also contains an amino or phenolic resin.

**Patentansprüche**

1. Verfahren zur Herstellung von Polyharnstoffschaumstoffen, bei welchem ein organisches Polyisocyanat mit mindestens einer chemisch äquivalenten Menge Wasser, wobei die Umsetzung von zwei Isocyanatgruppen mit einem Molekül Wasser zugrunde gelegt ist, in Gegenwart eines Katalysators für die Reaktion und eines Triarylphosphats und/oder einer aromatischen Halogenverbindung umgesetzt wird.

2. Verfahren nach Anspruch 1, bei welchem das Triarylphosphat und/oder die aromatische Halogenverbindung in einer Menge von 10 bis 200 Gew.-%, bezogen auf das Gewicht des Polyisocyanats, verwendet wird.

3. Verfahren nach Anspruch 2, bei welchem das Triarylphosphat und/oder die aromatische Halogenverbindung in einer Menge von 25 bis 75 Gew.-%, bezogen auf das Gewicht des Polyisocyanats, verwendet wird.

4. Verfahren nach einem der vorhergehenden Ansprüche, bei welchem das schaumbildende Reaktionsgemisch auch ein Amino- oder Phenolharz enthält.

**Revendications**

1. Procédé de préparation de mousses de polyurées, qui comprend la réaction d'un polyisocyanate organique avec au moins une quantité chimiquement équivalente d'eau, sur base de deux radicaux isocyanate réagissant avec une molécule d'eau, en présence d'un catalyseur pour la réaction et d'un phosphate de triaryle et/ou d'un composé aromatique halogéné.

2. Procédé suivant la revendication 1, dans lequel le phosphate de triaryle et/ou le composé aromatique halogéné sont utilisés en une quantité de 10 à 200% en poids, sur la base du poids de polyisocyanate.

3. Procédé suivant la revendication 2, dans lequel le phosphate de triaryle et/ou le composé aromatique halogéné sont utilisés en une quantité de 25 à 75% en poids, sur la base du poids du polyisocyanate.

4. Procédé suivant l'une quelconque des revendications précédentes, dans lequel le mélange de réaction formant la mousse contient également une résine aminoplaste ou phénolique.